# EUROPÄISCHE PATENTANMELDUNG

(11) **EP 1 495 947 A2**
(43) Veröffentlichungstag der Anmeldung: **12.01.2005**
(21) Anmeldenummer: 04013581.6
(22) Anmeldetag: 09.06.2004
(51) Int. Cl.: B62D 29/00

(54) **Hybridbauteil für Kraftfahrzeuge**

(30) Priorität: 11.07.2003 DE 20310656 U
(71) Anmelder: Hella-Behr Fahrzeugsysteme GmbH, 59557 Lippstadt (DE)
(72) Erfinder: Zhao, Goaming, Dr.-Ing., 59552 Lippstadt (DE); Braun, Dieter, Dipl.-Ing., 33378 Rheda-Wiedenbrück (DE)
(74) Vertreter: Elbertzhagen, Otto, Dipl.-Ing., Patentanwalt

(57) **Zusammenfassung**

Ein Hybridbauteil für Kraftfahrzeuge, insbesondere als Montageträger oder als Teil eines solchen Trägers für ein Frontendmodul, besteht aus einer dreidimensional verformten Blechschale (1) mit daran angespritzten Verstärkungsrippen (2) aus Kunststoff, wobei die Blechschale (1) diskrete Anbindungsstellen (3, 4) für den Kunststoff in Gestalt von Höckern (7), Näpfen (8) und/ oder Durchbrüchen aufweist. Die Anbindungsstellen (3, 4) sind in zumindest zwei unterschiedlichen Ebenen angeordnet. Zwischen jeder Anbindungsstelle (3) der einen Ebene und zumindest einer der Anbindungsstellen (4) der anderen Ebene besteht eine Verbindung über den Kunststoff.

## Beschreibung

Die Erfindung bezieht sich auf ein Hybridbauteil für Kraftfahrzeuge, insbesondere als Montageträger oder als Teil eines solchen Trägers für ein Frontendmodul, bestehend aus einer dreidimensional verformten Blechschale mit daran angespritzten Verstärkungsrippen aus Kunststoff, wobei die Blechschale diskrete Anbindungsstellen für den Kunststoff in Gestalt von Höckern, Näpfen und/oder Durchbrüchen aufweist.

Ein solches Hybridbauteil ist aus der Patentschrift DE 38 39 855 C2 bekannt. Bei diesem bekannten Leichtbauteil werden gute Festigkeits- und Steifigkeitseigenschaften dadurch erreicht, daß an den Anbindungsstellen der Verstärkungsrippen der Kunststoff, aus welchem die Verstärkungsrippen im Spritzgußverfahren gebildet sind, durch die Durchbrüche in der Blechschale hindurchreicht und den Rand der Durchbrüche an den von der Angußseite abgelegenen Seite der Blechschale hintergreift. Dadurch besteht an den Anbindungsstellen der Verstärkungsrippen jeweils eine solche Verbindung des die Verstärkungsrippen bildenden Kunststoffmaterials mit der Blechschale, die sowohl in Richtung der Ebene oder der Tangentialebene an die Blechschale an der Anbindungsstelle als auch senkrecht dazu einen Formschluß aufweist.

Für Bauteile, die in Kraftfahrzeugen zum Einsatz kommen, wird heute verlangt, nach Beendigung des Lebensdauer des aus dem Hybridbauteil gebildeten Funktionsbauteils, dessen Materialien recyceln zu können, sie also für gleiche oder andere Zwecke wieder verwendbar zu machen. Eine wirtschaftliche Voraussetzung dafür ist, die miteinander verbundenen Werkstoffe auf möglichst einfache Weise wieder voneinander trennen zu können. Bei dem bekannten Leichtbauteil setzt dies die Zerstörung entweder des Blechteils oder des Kunststoffmaterials zumindest an der Stelle der sogenannten Durchspritzungsstellen der Blechschale voraus, dies ist aufwendig und dadurch entstehen u.a. kleine und kleinste Partikel der voneinander getrennten Materialien, deren Rückführung in einen Recyclingprozeß entweder nur sehr schwierig oder gar nicht möglich ist.

Der Erfindung liegt die Aufgabe zugrunde, ein Hybridbauteil der eingangs genannten Art zu schaffen, welches ausreichende Festigkeits- und Steifigkeitseigenschaften hat und dessen Materialkomponenten sich im Recyclingfall einfacher voneinander trennen lassen.

Diese Aufgabe wird bei einem Hybridbauteil der genannten Art dadurch gelöst, daß die Anbindungsstellen in zumindest zwei unterscheidlichen Ebenen angeordnet sind und zwischen jeder Anbindungsstelle der einen Ebene und zumindest einer der Anbindungsstellen der anderen Ebene eine Verbindung über den Kunststoff besteht.

Für die Erfindung ist wesentlich, daß die zwei verschiedenen Ebenen, in denen die Anbindungsstellen angeordnet sind, eine ausreichende Formschlußsicherung zwischen dem die Verstärkungsrippen bildenden Kunststoffmaterial und der Blechschale ermöglichen. An jeder der Anbindungsstellen besteht eine Formschlußsicherung lediglich in der betreffenden Ebene, der die Anbindungsstelle zugeordnet ist, die ergänzende Formschlußsicherung findet an anderer Stelle, nämlich an denjenigen Anbindungsstellen statt, die der zweiten Ebene zugeordnet sind, welche mit der ersten Ebene nahezu parallel ist oder die zu der ersten Ebene winklig, beispielsweise unter einem Winkel von etwas mehr als 90 Grad, verläuft. Zum einen ist es dadurch leichter möglich, im Falle der Rückgewinnung die beiden Verbundwerkstoffe an den Anbindungsstellen leichter voneinander trennen zu können. Zwar erfordert dies nach wie vor eine mechanische Bearbeitung des dreidimensionalen Hybridbauteils, wegen des an jeder Anbindungsstelle bestehenden Formschluß in nur einer Ebene und nicht senkrecht zu dieser Ebene bringt man jedoch an den Anbindungsstellen den Werkstoff der Blechschale und das Kunststoffmaterial leichter auseinander.

Auch für die Herstellung des Hybridbauteils ergeben sich Vorteile. Zum einen gestaltet sich die Spritzgußform, in welche die Blechschale eingelegt und mit dem Kunststoffmaterial umspritzt wird, einfacher, weil sich besondere Kanäle für das Hinterspritzen von Durchbruchrändern an der Blechschale erübrigen. Zum zweiten wird auch Kunststoffmaterial eingespart, ohne daß eine nennenswerte Beeinträchtigung der Festigkeits- und Steifigkeitseigenschaften des gesamten Hybridbauteils in Kauf genommen werden muß. Eine doppelte Formschlußsicherung durch Hinterspritzen von Kanten der Blechschale kann vielmehr dort vorgesehen werden, wo sie einfacher zu realisieren ist, dies ist entlang der äußeren Ränder der Blechschale der Fall.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen Querschnitt durch ein Hybridbauteil in einer ersten Ausführungsform,
- Fig. 2: eine vergrößerte Darstellung des umkreisten Ausschnitts des Hybridbauteils nach Figur 1,
- Fig. 3: einen Querschnitt durch ein Hybridbauteil in anderer Ausführung,
- Fig. 4: einen Querschnitt durch ein Hybridbauteil in dritter Ausführung,
- Fig. 5: eine perspektivische Ansicht eines Hybridbauteils ähnlich dem nach den Ausführungen der Figuren 1 oder 3,
- Fig. 6: eine perspektivische, aufgeschnittene Außenansicht des Hybridbauteils nach Figur 5,
- Fig. 7: einen Querschnitt durch ein Hybridbauteil in weiterer Ausführung und
- Fig. 8: einen Querschnitt durch ein Hybridbauteil in einer nochmals anderen Ausführung.

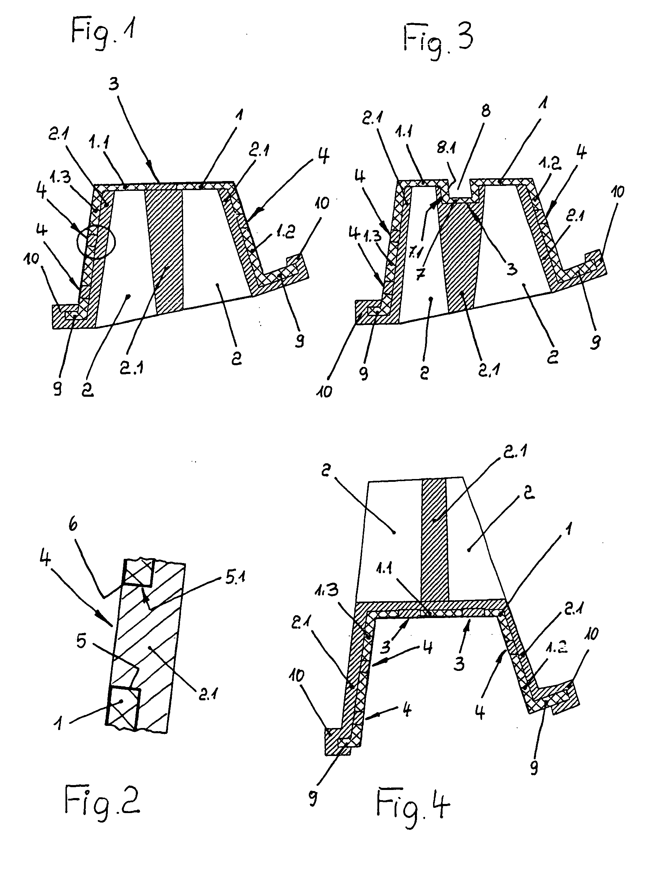

Im einzelnen erkennt man in Figur 1 eine dreidimensional verformte Blechschale 1, die vorzugsweise aus Stahlblech besteht. Die Blechschale 1 hat Wandungsabschnitte 1.1, 1.2 und 1.3, die winklig zueinander stehen. Da es sich bei der Blechschale 1 um ein im Ziehverfahren hergestelltes Blechteil handelt, sind die Winkel zum einen zwischen dem Wandungsteil 1.1 und dem Wandungsteil 1.2 und zum anderen zwischen dem Wandungsteil 1.1 und dem Wandungsteil 1.3 etwas größer als 90 Grad und liegen in der Größenordnung von 110 bis 130 Grad. Zwischen den Wandungsteilen 1.2 und 1.3 erstrecken sich Verstärkungsrippen 2, die auch an dem Wandungsteil 1.1 der Blechschale 1 angebunden sind. Die Verstärkungsrippen 2 bestehen aus einem angespritzten Kunststoffmaterial 2.1, welches weitere Verstärkungsrippen bildet, die quer zu den Verstärkungsrippen 2 verlaufen und mit diesen an Kreuzungsstellen einstückig verbunden sein können. Das die Verstärkungsrippen 2 bildende Kunststoffmaterial 2.1 kann zumindest in der Nachbarschaft der Verstärkungsrippen 2 weiter einen Überzug auf der betreffenden Seite der Blechschale 1 bilden.

Für das die Verstärkungsrippen bildende Kunststoffmaterial 2.1 gibt es Anbindungsstellen 3 an dem Wandungsteil 1.1 und weitere Anbindungsstellen 4 an den Wandteilen 1.2 und 1.3 der Blechschale 1. Entsprechend der Winkligkeit der Wandungsteile 1.2 und 1.3 zu dem Wandungsteil 1.1 der Blechschale 1 sind die Anbindungsstellen 4 in einer Ebene angeordnet, die winklig zu derjenigen Ebene stehen, in der sich die Anbindungsstellen 3 befinden. Abweichend von der ebenen Ausführung der Wandungsteile 1.1, 1.2 und 1.3 der Blechschale 1 kann auch eine gewölbte Ausführung vorgesehen sein, dann ist für die Anordnung der Anbindungsstellen 3 und 4 jeweils diejenige Ebene maßgeblich, die eine Tangentialebene an die Blechschale 1 an die Stelle der betreffenden Anbindung darstellt. Die Anbindungsstellen 3 und 4 sind so ausgeführt, daß zwischen dem Kunststoffmaterial 1. 2 und der Blechschale 1 lediglich ein Formschluß in Richtung der jeweiligen Ebene besteht, der die Anbindungsstelle 3 oder 4 zugeordnet ist. Senkrecht zu dieser Ebene besteht ein solcher Formschluß nicht an jeweils derselben Anbindungsstelle 3, 4, für diesen Formschluß in zu der Ebene der jeweiligen Anbindungsstelle 3,4 senkrechten Richtung sorgen diejenigen

Anbindungsstellen 4 oder 3 in derjenigen zweiten Ebene, die unter einem Winkel von größer 90 Grad vorzugsweise unter einem Winkel von 110 bis 130 Grad zu der ersten Ebene stehen.

An den Anbindungsstellen 3, 4 können im Material der Blechschale 1 Durchbrüche 5, wie insbesondere kreisrunde Durchgangslöcher, vorgesehen sein. Ein solcher Durchbruch 5 ist in Figur 2 in vergrößerter Darstellung wiedergegeben. Hier reicht das Kunststoffmaterial 2.1 von der in der Darstellung rechts liegenden Angußseite in den Durchbruch 5 hinein, es steht jedoch nicht über den von der Angußseite abliegenden Rand 6 des Durchbruchs 5 hervor. Die Kunststoffkontaktfläche 5.1, die sogenannte Lochleibung des Durchbruchs 5, die mit dem Kunststoffmaterial 2.1 in Kontakt steht, ist entweder hohlzylindrisch ausgebildet oder öffnet sich zur Anguß- oder Einlaufseite hin konisch. Somit besteht in der Fließrichtung des Kunststoffmaterials 2.1 von der Angußseite her gesehen ein Formschluß zwischen der Kontaktfläche 5.1 des Durchbruchs 5 der Blechschale 1 und dem Kunststoffmaterial 2.1 nicht. Dies gilt an allen Anbindungsstellen 3 und 4, sofern dort jeweils Durchbrüche 5 vorhanden sind. An den Anbindungsstellen 3, 4 können auch Höcker 7 vorgesehen sein, die in die Blechschale 1 eingeformt sind. Eine solche Anbindungsstelle zeigt Figur 3, hier ist der Höcker 7 im Bereich der Wandung 1.1. der Blechschale 1 mittels des Kunststoffmaterials 2.1, welches die Versteifungsstege 2 bildet, umspritzt. Die in der Kunststofffließrichtung liegende Kontaktfläche 7.1 des Höckers 7 ist hier ebenfalls zylindrisch oder entgegen der Kunststofffließrichtung sich konisch verjüngend ausgebildet, um in derjenigen Richtung, in welcher der Höcker 7 vorsteht, eine formschlüssige Verbindung zwischen dem Höcker 7 und dem Kunststoffmaterial 2.1 nicht zustandekommen zu lassen.

An den Anbindungsstellen 3, 4 können anstelle eines Durchbruchs 5 oder eines Höckers 7 auch topfartige Vertiefungen, nämlich Näpfe 8 vorgesehen sein, ein solcher Napf 8 ist ebenfalls in Figur 3 durch das Innere des dortigen Höckers 7 gebildet, wenngleich dieser Napf 8 hier nicht als Anbindungsstelle 3 oder 4 fungiert. Es soll hier lediglich deutlich gemacht werden, daß ein solcher Napf 8 durch Ausfüllen mit dem Kunststoffmaterial 2.1 in gleicher Weise als Anbindungsstelle dienen kann. Hierbei ist dann die Innenwandung 8.1 des Napfes 8 entweder hohlzylindrisch oder sie öffnet sich entgegen der Kunststofffließrichtung konisch, um auf diese Weise ebenfalls eine formschlüssige Verbindung zwischen dem Kunststoffmaterial 2.1 und der Napfwandung 8.1 senkrecht zu der Ebene der zugehörigen Anbindungsstelle 3 oder 4 zu vermeiden.

Während die Figuren 1 und 3 eine Blechschale 1 wiedergeben, bei denen Versteifungsstege 2 und damit das Kunststoffmaterial 2.1 an der inneren Hohlseite der Blechschale 1 angeordnet sind, zeigt Figur 4 eine Ausführung, bei der die Versteifungsstege 2 und das Kunststoffmaterial 2.1 an der äußeren, erhabenen Seite der dreidimensional verformten Blechschale 1 angeordnet sind. Grundsätzlich sind die Anbindungsstellen 3 und 4 hier in gleicher Weise wie bei den Ausführungsbeispielen nach den Figuren 1 und 3 ausgeführt, nur ist hier die Angußseite vertauscht und entsprechend die Fließrichtung des Kunststoffmaterials 2.1 beim Spritzgußvorgang bezogen auf die Blechschale 1 umgekehrt.

Die beschriebene vereinfachte Ausführung der Anbindungsstellen 3 und 4 genügt insbesondere sehr hohen Ansprüchen hinsichtlich der Festigkeit und der Steifigkeit des aus der Blechschale 1 und den Verstärkungsrippen 2 sowie gegebenenfalls dem aus dem Kunststoffmaterial 2.1 gebildeten Überzug, wenn das Kunststoffmaterial 2.1 die Längsränder der Blechschale 1 umklammert. Dazu weisen bei den dargestellten Ausführungsbeispielen die Blechschalen 1 entlang ihrer Ränder nach außen abgewinkelte Flansche 9 auf, die von dem Kunststoffmaterial 2.1 umgriffen werden, wodurch eine weitgehende Ummantelung 10 der Flansche 9 gebildet ist.

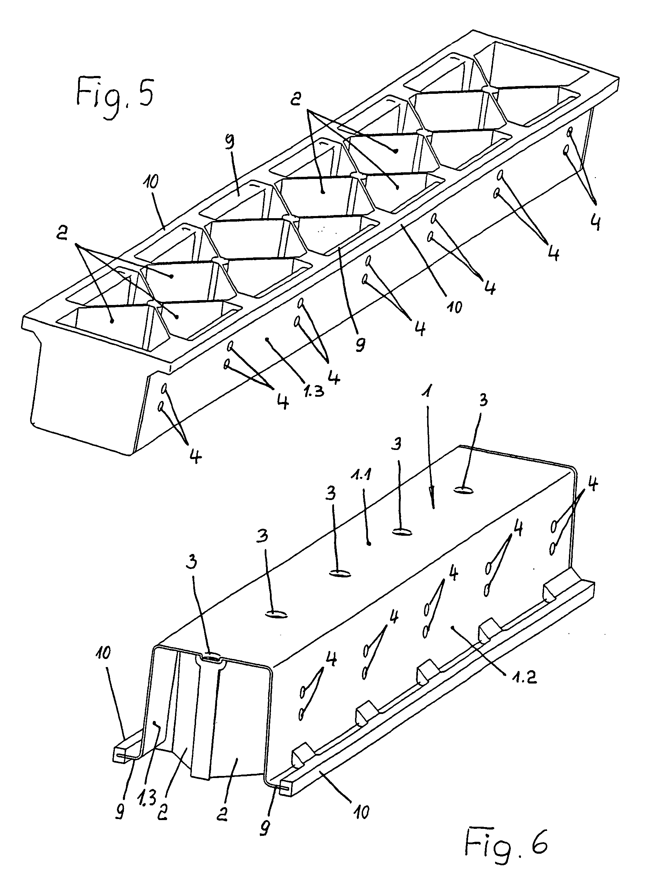

Die Figuren 5 und 6 machen deutlich, daß man trotz der relativ großen Anzahl vorhandener Verstärkungsrippen 2 bei einem Hybridbauteil der in Rede stehenden Art mit relativ wenigen Anbindungsstellen 3 und 4 auskommt. Zudem ist man bei der Lage der Anbindungsstellen 3, 4 an der Blechschale 1 keineswegs an diejenigen Stellen ge bunden, an denen die Verstärkungsrippen 2 auf die Wandungsteile 1.1, 1.2 oder 1.3 auftreffen. Auch müssen die Anbindungsstellen 3, 4 nicht dort liegen, wo sich ein Kreuzungspunkt der Verstärkungsrippen 2 an dem jeweiligen Wandungsteil 1.1 bis 1.3 der Blechschalen befindet. So können die Verstärkungsrippen 2 einstückig mit einem Überzug der betreffenden Wandungen 1.1. bis 1.3 der Blechschale 1 sein, in dessen Bereich sich die Anbindungsstellen 3. 4 befinden, die somit in Abstand von einem Kreuzungspunkt der Verstärkungsrippen 2 oder von den Übergangsstellen der Verstärkungsrippen 2 in diesen Überzug liegen.

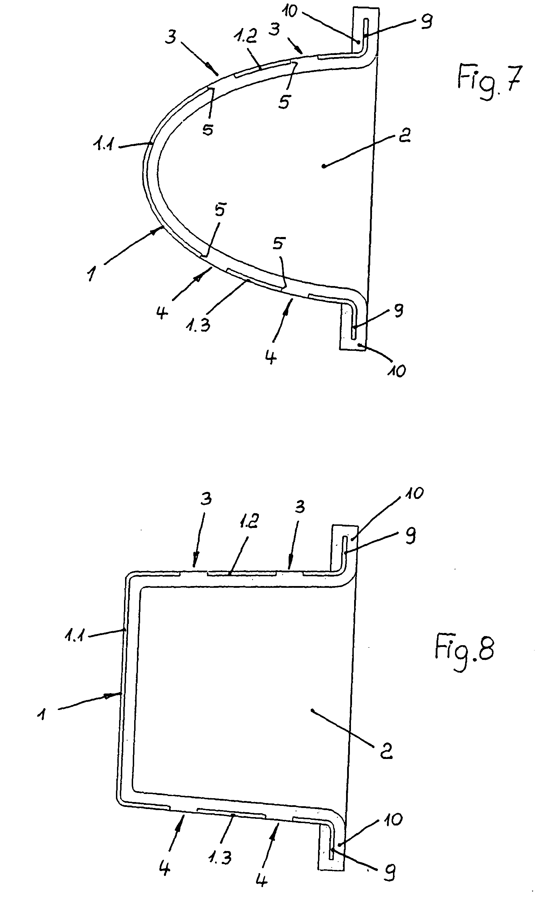

Die Figuren 7 und 8 veranschaulichen Ausführungen, bei denen die Anbindungsstellen in Ebenen angeordnet sind, die lediglich geringe Winkel miteinander einschließen. Zwar sind bei dem Ausführungsbeispiel nach Figur 7 die Wandungsteile 1.2 und 1.3 der Blechschale, an denen sich die Anbindungsstellen 3, 4 befinden, nicht eben ausgebildet, darauf kommt es jedoch nicht an. Denn jede der Anbindungsstellen 3, 4, an denen hier Durchbrüche 5 vorgesehen sind, stellen mit der Lochebene des jeweiligen Durchbruchs 5 eine Ebene dar, die von den gleichermaßen anzuzusehenden Ebenen der anderen Anbindungsstellen 3 oder 4 verschieden ist. Insbesondere sind hier die Ebenen der Anbindungsstellen 3 unterschiedlich zu denen der Anbindungsstellen 4.

Um die gewünschte Formschlußsicherung an den Anbindungstellen 3 und 4 zu erzielen, ist das Kunststoffmaterial der an der Blechstelle 1 einander gegenüberliegenden Anbindungsstellen einstückig miteinander verbunden. Vorzugsweise geschieht dies durch eine der Verstärkungsrippen 2.

Ähnlich dem Ausführungsbeispiel gemäß Figur 7 ist das Ausführungsbeispiel nach Figur 8. Allerdings sind hier die mit den Anbindungsstellen 3, 4 versehenen Wandungsabschnitte 1.2 und 1.3 der Blechschale nicht nur eben ausgeführt, sie verlaufen nahezu parallel miteinander. So beträgt der Winkel, den die Wandungsteile 1.2 und 1.3 miteinander einschließen, etwa 5 Grad, und dies entspricht dem Winkel, der zu einwandfreien Entformung des Bauteils nach Ausspritzen oder Umspritzen der Blechschale 1 erforderlich ist.

## Patentansprüche

1. Hybridbauteil für Kraftfahrzeuge, insbesondere als Montageträger oder als Teil eines solchen Trägers für ein Frontendmodul, bestehend aus einer dreidimensional verformten Blechschale (1) mit daran angespritzten Verstärkungsrippen (2) aus Kunststoff, wobei die Blechschale (1) diskrete Anbindungsstellen (3, 4) für den Kunststoff in Gestalt von Höckern (7), Näpfen (8) und/oder Durchbrüchen (5) aufweist,
**dadurch gekennzeichnet,**
**daß** die Anbindungsstellen (3, 4) in zumindest zwei unterschiedlichen Ebenen angeordnet sind und zwischen jeder Anbindungstelle (3) der einen Ebene und zumindest einer der Anbindungsstellen (4) der anderen Ebene eine Verbindung über den Kunststoff besteht.

2. Hybridbauteil nach Anspruch 1,
**dadurch gekennzeichnet,**
**daß** die Verbindung über den Kunststoff zwischen den Anbindungsstellen (3, 4) der unterschiedlichen Ebenen aus wenigstens einer der Verstärkungsrippen (2) besteht.

3. Hybridbauteil nach Anspruch 1 oder 2,
**dadurch gekennzeichnet,**
**daß** der Winkel zwischen den unterschiedlichen Ebenen der Anbindungsstellen (3, 4) in dem Bereich von 3 Grad bis 20 Grad liegt.

4. Hybridbauteil nach Anspruch 1 oder 2,
**dadurch gekennzeichnet,**
**daß** der Winkel zwischen den unterschiedlichen Ebenen, in denen sich die Anbindungsstellen (3, 4) befinden, unter einem Winkel größer 90 Grad zueinander stehen.

5. Hybridbauteil nach einem der Ansprüche 1 -4,
**dadurch gekennzeichnet,**
**daß** an den im Bereich jeweils eines Durchbruchs (5) gebildeten Anbindungsstellen (3, 4) der Kunststoff maximal bis zum dem von der Einlaufseite abliegenden Durchbruchrand (6) reicht.

6. Hybridbauteil nach einem der Ansprüche 1 - 5,
**dadurch gekennzeichnet,**
**daß** die Verstärkungsrippen (2) einander kreuzen und jeweils die in einer der Ebenen liegenden Anbindungsstellen (3, 4) im Bereich der zumindest einen Rippenkreuzung sich befinden.

7. Hybridbauteil nach einem der Ansprüche 1 - 6,
**dadurch gekennzeichnet,**
**daß** das die Verstärkungsrippen (2) bildende Kunststoffmaterial (2.1) zumindest eine der Seiten der Blechschale (1) wenigstens teilweise in Form eines Überzugs bedeckt und jeweils die in einer der Ebenen liegenden Anbindungsstellen (3, 4) im Bereich dieses Überzugs angeordnet sind.

8. Hybridbauteil nach einem der Ansprüche 1 - 7, **dadurch gekennzeichnet,**
**daß** die Blechschale (1) ein im Umformprozeß hergestelltes Blechteil ist und randliche, nach außen abgewinkelte Flansche (9) aufweist, die mittels einer Ummantelung (10) des die Verstärkungsrippen (2) bildenden Kunststoffmaterials (2.1) umgriffen sind.
